# EUROPEAN PATENT APPLICATION

(11) **EP 4 823 220 A1**
(43) Date of publication of application: **14.10.2026**
(21) Application number: 23960452.3
(22) Date of filing: 05.12.2023
(51) Int. Cl.: H04W 74/0833

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: DU, Zhongda, Dongguan, Guangdong 523860 (CN)
(74) Representative: RGTH
(86) International application number: PCT/CN2023/136422
(87) International publication number: WO 2025/118137

(57) **Abstract**

Provided are a wireless communication method and a communication device. The method comprises: a first terminal device sends a first terminal device identifier to a target device; and the first terminal device receives first information sent by the target device, wherein the first information comprises the terminal device identifier received by the target device, and the target device includes a network device and/or a second terminal device. In embodiments of the present application, the first terminal device can perform a random access procedure on the basis of the first terminal device identifier. Upon comparison with a conventional random access procedure, the power consumption of a terminal device in the present random access procedure can be reduced.

## Description

### TECHNICAL FIELD

The present disclosure relates to the technical field of communications, and more specifically, to a wireless communication method and a communication device.

### BACKGROUND

The conventional random access procedure is too complicated, which may cause that power consumption of a terminal device is relatively high. In some scenarios, to reduce the power consumption of the terminal device, a reduced-capability terminal device (e.g., an electronic tag introduced previously) is introduced. A terminal device of this type, compared with a conventional terminal device, may support a simpler communication mode. In this case, if the terminal device of this type remains to access a network device by using the conventional random access manner, the power consumption of the terminal device may increase.

### SUMMARY

The present disclosure provides a wireless communication method and a communication device. Various aspects involved in the present disclosure are introduced below.

In a first aspect, there is provided a wireless communication method, which includes: a first terminal device transmits a first terminal device identifier to a target device; and the first terminal device receives first information transmitted by the target device, the first information including a terminal device identifier received by the target device, where the target device includes a network device and/or a second terminal device.

In a second aspect, there is provided a wireless communication method, which includes: a target device receives a first terminal device identifier transmitted by a first terminal device; and the target device transmits first information, the first information including a terminal device identifier received by the target device, where the target device includes a network device and/or a second terminal device.

In a third aspect, there is provided a terminal device, which is a first terminal device and includes: a transmitting unit, configured to transmit a first terminal device identifier to a target device; and a receiving unit, configured to receive first information transmitted by the target device, the first information including a terminal device identifier received by the target device, where the target device includes a network device and/or a second terminal device.

In a fourth aspect, there is provided a communication device, which is a target device and includes: a receiving unit, configured to receive a first terminal device identifier transmitted by a first terminal device; and a transmitting unit, configured to transmit first information, the first information including a terminal device identifier received by the target device, where the target device includes a network device and/or a second terminal device.

In a fifth aspect, there is provided a terminal device, which includes: a processor, a memory, and a communication interface, where the memory is configured to store one or more computer programs, and the processor is configured to invoke the computer program(s) in the memory, to enable the terminal device to perform some or all operations of the method according to the first aspect.

In a sixth aspect, there is provided a communication device, which includes: a processor, a memory, and a transceiver, where the memory is configured to store one or more computer programs, and the processor is configured to invoke the computer program(s) in the memory, to enable the communication device to perform some or all operations of the method according to the second aspect.

In a seventh aspect, the present disclosure provides a communication system, which includes the above-mentioned terminal device and/or network device. In another possible design, the system may also include other devices in solutions provided in the embodiments of the present disclosure that interact with the terminal device or the target device.

In an eighth aspect, the present disclosure provides a computer-readable storage medium, which stores a computer program, and the computer program enables a communication device (e.g., a terminal device or a target device) to perform some or all operations of the methods according to the above various aspects.

In a ninth aspect, the present disclosure provides a computer program product. The computer program product includes a non-transitory computer-readable storage medium storing a computer program, and the computer program is operable to enable a communication device (e.g., a terminal device or a target device) to perform some or all operations of the methods according to the above various aspects. In some implementations, the computer program product may be a software installation package.

In a tenth aspect, the present disclosure provides a chip, which includes a memory and a processor, where the processor can invoke a computer program from the memory and run the computer program, to implement some or all operations described in the methods according to the above various aspects.

In the embodiments of the present disclosure, the first terminal device can perform a random access procedure based on the first terminal device identifier, which, compared with the conventional random access procedure, helps to reduce the power consumption of the terminal device during the random access procedure.

### BRIEF DESCRIPTION OF DRAWINGS

FIG. 1 illustrates a wireless communication system 100 to which embodiments of the present disclosure are applied.
FIG. 2A is a schematic diagram illustrating a conventional 4-step random access procedure.
FIG. 2B is a flowchart illustrating a non-contention random access procedure.
FIG. 2C is a schematic diagram illustrating a conventional 2-step random access procedure.
FIG. 2D is a flowchart illustrating another conventional 2-step random access procedure.
FIG. 3 is a schematic diagram of an ambient Internet of things (A-IoT) communication system to which embodiments of the present disclosure are applicable.
FIG. 4A to FIG. 4D are schematic diagrams illustrating four types of network topology structures of an A-IoT communication system to which embodiments of the present disclosure are applicable.
FIG. 5 is a schematic diagram illustrating a reception process of a radio frequency (RF) receiver to which embodiments of the present disclosure are applicable.
FIG. 6 is a schematic diagram illustrating a reception process of an intermediate frequency receiver to which embodiments of the present disclosure are applicable.
FIG. 7 is a schematic flowchart of an initial access procedure of radio frequency identification (RFID).
FIG. 8 is a schematic flowchart of a wireless communication method according to an embodiment of the present disclosure.
FIG. 9 is a schematic diagram illustrating an indication manner of a first time-domain resource according to an embodiment of the present disclosure.
FIG. 10 is a schematic flowchart of a random access method according to an embodiment of the present disclosure.
FIG. 11 is a schematic flowchart of a random access method according to another embodiment of the present disclosure.
FIG. 12 is a schematic flowchart of a random access method according to another embodiment of the present disclosure.
FIG. 13 is a schematic flowchart of a random access method according to another embodiment of the present disclosure.
FIG. 14 is a schematic diagram of a terminal device according to an embodiment of the present disclosure.
FIG. 15 is a schematic diagram of a communication device according to an embodiment of the present disclosure.
FIG. 16 is a schematic structural diagram of a communication apparatus according to an embodiment of the present disclosure.

### DETAILED DESCRIPTION OF EMBODIMENTS

The technical solutions in the present disclosure are described below with reference to the drawings.

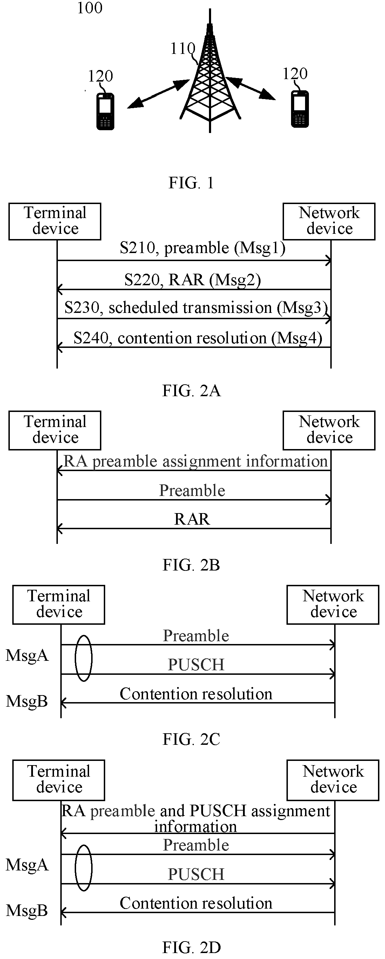

FIG. 1 illustrates a wireless communication system 100 to which embodiments of the present disclosure are applied. The wireless communication system 100 may include a network device 110 and terminal devices 120. The network device 110 may be a device that performs communication with the terminal devices 120. The network device 110 may provide communication coverage for a specific geographical area and may perform communication with the terminal devices 120 located within the coverage area.

FIG. 1 exemplarily illustrates one network device and two terminal devices. Optionally, the wireless communication system 100 may include multiple network devices, and the coverage area of each network device may include other numbers of terminal devices, which are not limited in the embodiments of the present disclosure.

Optionally, the wireless communication system 100 may also include other network entities such as a network controller, and a mobility management entity, etc, which are not limited in the embodiments of the present disclosure.

It should be understood that the technical solutions of the embodiments of the present disclosure may be applied to various communication systems, such as: a fifth-generation (5G) system or a new radio (NR), a long-term evolution (LTE) system, an LTE frequency division duplex (FDD) system, and an LTE time division duplex (TDD) system. The technical solutions provided by the present disclosure may also be applied to future communication systems, such as a sixth-generation mobile communication system, and a satellite communication system.

In the embodiments of the present disclosure, the terminal device may also be referred to as user equipment (UE), an access terminal, a user unit, a user station, a mobile site, a mobile station (MS), a mobile terminal (MT), a remote station, a remote terminal, a mobile device, a user terminal, a terminal, a wireless communication device, a user agent or a user apparatus. In the embodiments of the present disclosure, the terminal device may refer to a device that provides voice and/or data connectivity to a user, and may be used to connect people, objects and machines, such as a handheld device or in-vehicle device with a wireless connection function. In the embodiments of the present disclosure, the terminal device may be a mobile phone, a tablet computer (Pad), a laptop computer, a handheld computer, a mobile Internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. Optionally, the UE may be configured to act as a base station. For example, the UE may act as a scheduling entity that provides sidelink signals between UEs in vehicle-to-everything (V2X) or device-to-device (D2D) communication. For example, a cellular phone and a car may communicate with each other by using sidelink signals. A cellular phone and a smart home device may communicate with each other without relaying communication signals via a base station.

The network device in the embodiments of the present disclosure may be a device used for communicating with a terminal device. The network device may also be referred to as an access network device or a radio access network device, for example, the network device may be a base station. The network device in the embodiments of the present disclosure may refer to a radio access network (RAN) node (or device) that connects a terminal device to a wireless network. The base station may broadly cover the following various names, or may be replaced with the following names, such as: a NodeB, an evolved NodeB (eNB), a next generation base station (next generation NodeB, gNB), a relay station, an access point (AP), a transmitting and receiving point (TRP), a transmitting point (TP), a master eNB (MeNB), a secondary eNB (SeNB), a multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), and a positioning node. The base station may be a macro base station, a micro base station, a relay node, a donor node, or similar entities, or a combination thereof. The base station may also refer to a communication module, a modem or a chip configured to be set in the above-mentioned devices or apparatuses. The base station may also be a mobile switching center; a device that performs functions of the base station in a device-to-device (D2D) communication, a vehicle-to-everything (V2X) communication and a machine-to-machine (M2M) communication; a network-side device in a 6G network; and a device that performs functions of the base station in a future communication system; etc. The base station may support networks with the same or different access technologies. The specific technologies used by the network device and the specific device forms of the network device are not limited in the embodiments of the present disclosure.

The base station may be immobile or mobile. For example, a helicopter or a drone may be configured to act as a mobile base station, and one or more cells may move based on the location of the mobile base station. In other examples, the helicopter or the drone may be configured to act as a device communicating with another base station.

In some deployments, the network device in the embodiments of the present disclosure may refer to a CU or a DU, or the network device includes a CU and a DU. The gNB may also include an AAU.

The network device and the terminal device may be deployed on land, which includes indoor or outdoor, in handheld or in-vehicle; or may also be deployed on water; or may also be deployed on an airplane, a balloon and satellite in the air. The scenarios in which the network device and terminal device are located are not limited in the embodiments of the present disclosure.

It should be understood that all or some of the functions of the communication device in the present disclosure may also be implemented by software functions running on hardware, or implemented by virtualized functions instanced on a platform (e.g., a cloud platform).

### Random Access Procedure

In some protocols, two types of random access procedures are stipulated: a 2-step random access channel (2-step RACH) and a 4-step random access channel (4-step RACH). The 4-step RACH procedure was introduced in the LTE system and is also used in the NR system. The conventional 4-step random access procedure is described below with reference to FIG. 2A. Generally, before initiating a RACH procedure, a terminal device may first obtain a PRACH (physical random access channel) resource configuration from a system message or dedicated signaling. Subsequently, operations S210 to S240 may be performed.

In operation S210, the terminal device transmits a preamble to a network device. The preamble may be referred to as a message 1 (Msg1) in an MAC layer protocol.

Generally, after the preamble is transmitted, a message 2 (Msg2) fed back by the network device within a reception window may be waited. A starting time and an ending time of the reception window are set according to configuration parameters. From the perspective of the network device, the network device has a capability to distinguish a preamble received on different time-frequency domains, or different preambles on the same time-frequency domain. However, the network device cannot distinguish identical preambles transmitted by multiple terminal devices that received on the same time-frequency domain, and in this case, an access contention would happen.

In operation S220, the network device transmits the message 2 to the terminal device.

Generally, the message 2 may be a group-transmitted message, that is, the message 2 may include a random access response (RAR) message for multiple terminal devices. Addressing information of the message 2 is contained in a group-transmitted identifier that is referred to as a random access-radio network temporary identifier (RA-RNTI), which is used to identify time-domain resource information, frequency-domain resource information, and carrier type information in which a received preamble is located. The carrier type information is used to indicate a carrier in which the preamble is located is a supplementary uplink (SUL) carrier or a normal uplink (NUL) carrier.

That is, one message 2 may include a RAR corresponding to a preamble received from the same carrier and the same time-frequency point. A RAR IE transmitted to each terminal device may include: a temporary identifier (temporary cell-radio network temporary identifier, T_C_RNTI), a timing advance (for uplink synchronization), and an uplink grant (UL-GRANT) for transmitting a message 3 (Msg3) that are configured by the network device for the terminal device, and an index of the preamble received by the network device.

In some implementations, the message 2 may also include a backoff parameter for mitigating the contention between preambles. In this case, if the terminal device decides to transmit the preamble again, a random time may be generated based on the backoff parameter, such that a transmission time of the preamble being re-transmitted is at least later than the generated random time.

In operation S230, in response to determining that the network device has received the preamble transmitted by the terminal device, the terminal device transmits the message 3, also referred to as "scheduled transmission," to the network device based on the UL-GRANT. The message 3 includes a terminal device identifier (also referred to as a terminal device ID).

Generally, the terminal device may determine whether the network device has received the preamble transmitted by the terminal device based on the RA-RNTI and a preamble index in the RAR. In response to determining that the network device has received the preamble transmitted by the terminal device, the terminal device transmits the message 3 based on the UL-GRANT, which includes at least a terminal identifier (terminal device ID). The message 3 may be addressed using the T_C_RNTI at the physical layer.

Next, the terminal device may start a timer and detect a physical downlink control channel (PDCCH) carrying a message 4 during the running of the timer. In a case where a contention happens among multiple terminal devices in operation S210, the contention will continue happening in operation S230 because multiple terminal devices will transmit the message 3 based on the same UL-GRANT, but terminal identifiers contained in a medium access control control element (MAC CE) of the message 3 are different.

In operation S240, in response to correctly decoding the message 3, the network device may transmit a message 4 (Msg4) to the terminal device. This message is also referred to as "contention resolution."

Generally, the message 4 is addressed using the T_C_RNTI in the received message 3, and the MAC CE in the message 3 includes the terminal device identifier contained in the message 3 by the terminal device, and a newly allocated C-RNTI.

In a case where multiple terminal devices transmit messages 3 on the same UL GRANT, the network device may be capable of correctly decoding one of the messages 3 or fail to decode (for example, when the interference levels among the messages 3 transmitted by the multiple terminal devices are comparable). Therefore, when the message 4 is received, if the terminal device finds that the T_C_RNTI convolved on a physical downlink control channel (PDCCH) matches a T_C_RNTI used by the terminal device for transmitting the message 3, the terminal device will further check whether the medium access control control element (MAC CE) in the message 4 transmitted by the network device contains the terminal device identifier of the terminal device. Next, only if the message 4 contains the terminal device identifier of the terminal device can the terminal device determine that the random access procedure is completed and use the newly allocated C-RNTI as its own identification. The identification is used for addressing information in a subsequent physical layer, MAC, and radio resource control (RRC) layer protocol.

The random access procedure described above with reference to FIG. 2A may also be referred to as a contention based random access (CBRA) procedure. Some protocols also introduce a non contention based or contention free random access (CFRA) procedure. FIG. 2B illustrates a flowchart of the non contention based random access procedure. In the non contention based random access procedure, the network device may assign certain random access resources to a terminal device, and accordingly, the network device may identify a certain terminal device through a random access preamble.

Referring to FIG. 2B, the network device transmits RA preamble assignment information to the terminal device. Next, in response to the RA preamble assignment information, the terminal device may transmit a preamble to the network device. Correspondingly, the MAC processing process at the network device is the same as that in the contention based random access procedure. After receiving the preamble, the network device may transmit a random access response (RAR) to the terminal device. Correspondingly, the processing process at the terminal device is the same as that in the contention based random access procedure.

The difference between the 2-step random access procedure and the 4-step random access procedure is: that content of the message A in the 2-step random access procedure combines the message 1 and the message 3 in the 4-step random access procedure, and the message B in the 2-step random access procedure combines content of the message 2 and the message 4 in the 4-step random access procedure. FIG. 2C and FIG. 2D illustrates conventional 2-step random access procedures.

Referring to FIG. 2C, the terminal device transmits a message A to the network device. The message A includes a preamble and a physical uplink shared channel (PUSCH), where the PUSCH contains a terminal device identifier of the terminal device. Next, the network device transmits a message B (also referred to as "a contention resolution message") to the terminal device. There are two types of manners for addressing the terminal device in the message B: a manner 1 and a manner 2.

In the manner 1, in a case where the terminal device identifier in the message A is a cell-radio network temporary identifier (C-RNTI), it is also the C-RNTI that is convolved on the PDCCH carrying the message B. In this case, if the terminal device can determine that the C-RNTI convolved on the PDCCH for the message B (also referred to as contention resolution) matches the C-RNTI of the terminal device, the random access procedure has succeeded, that is, the contention has been resolved.

Generally, the manner 1 is applicable to a terminal device in an RRC_CONNECTED state, that is, the terminal device has completed an initial access and has established an RRC connection with the network device.

In the manner 2, in a case where the terminal device identifier in the message A is an identifier other than the C-RNTI, it is the RA-RNTI that is convolved on the PDCCH carrying the message B. Accordingly, in a case where the terminal device identifier contained in the success RAR (SuccessRAR) in the message B matches the terminal device identifier of the terminal device, the terminal device considers that the random access procedure succeeds and the contention is resolved. Otherwise, the terminal device may choose to retransmit the message A, or the terminal device fallbacks to the 4-step random access procedure.

Generally, the manner 2 is applicable to scenarios other than those to which the manner 1 is applicable.

Referring to FIG. 2D, the network device transmits assignment information (also referred to as RA preamble and PUSCH assignment information) to the terminal device, to assign transmission resources for transmitting a preamble and a PUSCH. Next, the terminal device transmits a message A to the network device based on the assignment information. The message A includes the preamble and the PUSCH, where the PUSCH contains a terminal device identifier of the terminal device. Then, the network device transmits a message B (also referred to as "random access response") to the terminal device.

### Internet of Things (IoT) Technology

The rise of the IoT technology has brought new challenges for communication systems. The use case of an IoT terminal device may include logistics, warehousing, factory automation, and animal husbandry. The IoT terminal device may perform intermittent simple communication or rough positioning and tracking with a network device. Even a simplest IoT terminal device, e.g., an NB-IoT terminal device used for coal electricity metering, also requires a battery for power supplying. However, although the power consumption of IoT terminal devices is very low, their internal batteries can last for a few years at most and will eventually be exhausted. Therefore, the batteries of IoT terminal devices need to be replaced regularly, which consumes a great deal of human labor. Furthermore, some industrial scenarios have certain dangers and are not suitable for human operations. Therefore, battery-free IoT terminal devices emerge.

Battery-free IoT terminal devices are numerous, low-cost, and generally do not require human maintenance after installation. Radio frequency identification (RFID) terminal devices may, to some extent, meet the demand for the battery-free IoT terminal devices. However, the operation of the RFID system still requires human participation, for example, some certain RFID systems require holding a reader by human labor. Moreover, the wireless coverage range of a single RFID reader is limited (within 10 meters), so a large-scale deployment of the RFID system requires more human participation. For example, using the RFID system to take inventory of commodities in a large supermarket requires consuming considerable manpower, resources, and time.

### Ambient IoT (A-IoT) Communication System

Migrating a system similar to the RFID to the cellular network can effectively solve the problem of limited coverage range. This is because the cellular network (e.g., the 4th generation (4G) system and the 5G system) have achieved nationwide coverage or at least major city coverage in some countries or regions (e.g., China and Europe and America). Based on the broader network coverage range, the communication or positioning process between the IoT terminal device and the network device may be performed without human participation. Therefore, the IoT terminal device may operate continuously and the operating efficiency is high. Furthermore, the IoT terminal device may even operate efficiently in environments unsuitable for human labor (e.g., wilderness, mines, factories). Thus, in a case of using the IoT terminal device, in addition to the initial need to associate the IoT terminal device with a specific object, subsequent data reading, writing, and maintenance may be performed through an App on a smartphone, which is very convenient and effective. Such a communication system may be referred to as an ambient IoT communication system or a zero-power consumption communication system.

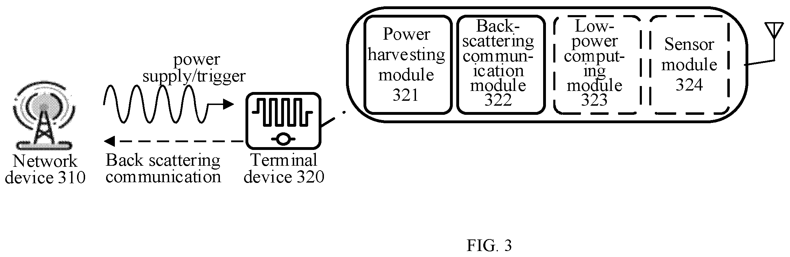

As illustrated in FIG. 3, the A-IoT communication system may consist of a network device 310 and a terminal device 320. The network device 310 may be, for example, a reader. The terminal device 320 (also referred to as an A-IoT device) may be, for example, a tag which is also referred to as an electronic tag. Generally, the power source of the A-IoT device comes from the ambient environment, such as radio frequency (RF) waves, solar power, thermal power, mechanical vibrations, or wind power. Accordingly, the A-IoT communication system employs power harvesting and backscattering communication technologies. The network device 310 may transmit a wireless power supply signal and a downlink communication signal to the terminal device 320, and receive a backscattering signal from the terminal device 320.

Continuing referring to FIG. 3, the terminal device 320 may include a power harvesting module 321, a backscattering communication module 322, and a low-power computing module 323. In other scenarios, the terminal device 320 may further include a memory module (not illustrated in the figure) used to store some pieces of basic information (e.g., an object identifier). In still other scenarios, the terminal device 320 may further include a sensor module 324 used to obtain sensor data such as ambient temperature and ambient humidity.

In some protocols, it is discussed that the use case of the A-IoT communication system may be classified into four major categories: inventory, sensor, tracking, and command. Inventory refers to checking for missing or replenishing the commodities when the commodities enter or leave the warehouse. The common sensor may include a temperature sensor, a pressure sensor, and a humidity sensor. The sensors may be used in occasions of industry, agriculture and smart city, etc; and information collected by the sensors may be uploaded, through the A-IoT system, to a third-party application (App) for monitoring and management. Tracking broadly refers to irregularly obtaining the approximate orientation of an object; for example, a user may know the orientation of own express delivery in real time through a smartphone. Command refers to operating a certain type of servo mechanism through the A-IoT system, where servo mechanisms may be connected to the A-IoT terminal device. For example, people may water flowers in the backyard through a mobile App while working or resting in the office, where the watering servo mechanism may be connected to a certain A-IoT terminal device.

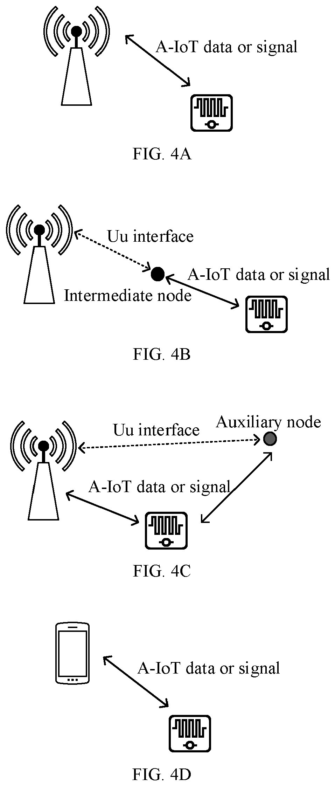

In some protocols, the A-IoT communication system is classified into four types of network topology structures as illustrated in FIG. 4A to FIG. 4D. Referring to FIG. 4A, data or signal (also referred to as A-IoT data or signal) may be directly transmitted between the network device and the A-IoT device.

Referring to FIG. 4B, the network device may perform communication with the A-IoT device via an intermediate node, where the data or information transmitted between the intermediate node and the terminal device is also referred to as A-IoT data or signal. The intermediate node may be another network device, and in this case, the intermediate node may perform communication with the network device via an Uu interface. For example, the intermediate node may transmit data or a signal to the network device via the Uu interface, and the intermediate node may receive data or a signal transmitted by the network device via the Uu interface.

Referring to FIG. 4C, the network device may perform communication with the A-IoT device via an auxiliary node, where the data or information transmitted between the auxiliary node and the terminal device is also referred to as A-IoT data or signal, and the data or information transmitted between the terminal device and the network device is also referred to as A-IoT data or signal. The auxiliary node may be another network device, and in this case, the auxiliary node may only receive data or a signal transmitted by the network device via the Uu interface and is unable to transmit data or a signal to the network device.

Referring to FIG. 4D, data or signal (also referred to as A-IoT data or signal) may be directly transmitted between the terminal device and the A-IoT device.

In some protocols, the A-IoT device may be classified into three types: a Type A, a Type B, and a Type C. For a terminal device of the Type A and a terminal device of the Type B, terminal devices of these types may only perform communication by reflecting and modulating the received radio wave, and this communication manner is referred to as backscattering (back-scattering). That is, devices of these types cannot actively transmit a radio signal, and their power is within the range of 1 to 10 microwatts (uW). Among them, the terminal device of the Type A has the lowest transmit power and the lowest hardware complexity, which is essentially approaching the level of the RFID terminal device. Whereas the hardware of the terminal device of the Type B is slightly more complex, and may include a signal amplifier (AMP) and a certain power storage device. Therefore, a communication distance between the terminal device of the Type B and the network device is greater than a communication distance between of the terminal device of the Type A and the network device. A terminal device of the Type C is generally has the capability of actively transmitting a radio wave, with the transmit power approximately being 1 to 10 milliwatts (mW), and may store a certain amount of power. Terminal devices of the three types all are capable of harvesting the power from the environment and may operate continuously for several years, or even more than a decade. Furthermore, to save the power, the terminal device of the Type A and the terminal device of the Type B basically remain in a dormant state before the network device triggers a communication process with them. The terminal device of the Type A and the terminal device of the Type B only begin to operate after being activated by a wireless signal from the network device.

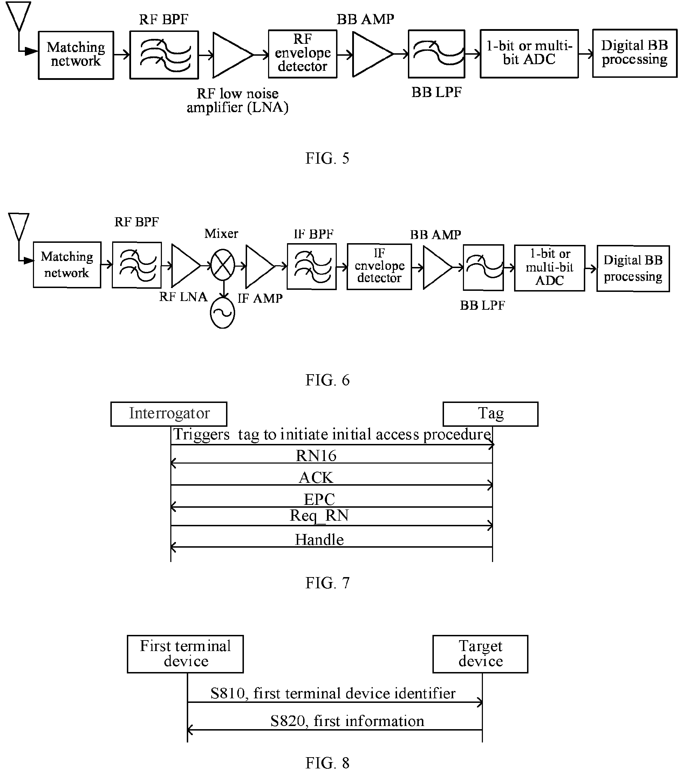

At present, the receiver of the A-IoT device may include two primary types: a receiver Type 1 and a receiver Type 2. The receiver Type 1 is a wideband receiver, and this type of the receiver is also referred to as an RF receiver. The RF receiver may obtain, through a radio frequency band-pass filter (RF BPF), a signal within a bandwidth range to be received by the RF receiver, and then perform envelope detection and subsequent baseband (BB) processing. The architecture of the RF receiver is the simplest, and its power consumption may be as low as a few microwatts (uW) or even lower. However, since the precision of the RF band-pass filter is relatively poor, even when a target signal occupies a narrow bandwidth, the RF receiver tends to receive a signal within a wider bandwidth. Therefore, the reception process of the RF receiver would introduce a large amount of noise and interference, and the reception performance is relatively poor, or in other words, the reception sensitivity is relatively poor. A typical reception process of the RF receiver is illustrated in FIG. 5.

The receiver Type 2 is a narrowband receiver, and this type of receiver may include an intermediate frequency (IF) receiver or a zero-intermediate frequency receiver. In the signal reception, in addition to obtaining, through an RF band-pass filter, the signal within the bandwidth range to be received by the narrowband receiver, the narrowband receiver may also down-convert the RF signal and further filter the baseband signal with a low-pass filter (LPF) to eliminate the noise and interference. Therefore, the reception bandwidth of the narrowband receiver is narrow, and the reception performance is good, or in other words, the reception sensitivity is relatively high. However, the narrowband receiver needs to use a local oscillator (LO). The power consumption of the LO is relatively high, and even an LO that is recommended to be used consumes 100 uW or higher power consumption. Therefore, the relative power consumption of the narrowband receiver is relatively high, but because its absolute power consumption is relatively low, the narrowband receiver remains to be suitable for use in the zero-power device. A typical reception process of the intermediate frequency receiver is illustrated in FIG. 6.

In some scenarios, the terminal device of the Type A generally employs the wideband receiver; the communication device of the Type C generally employs the narrowband receiver, and the terminal device of the Type B may employ one type of receiver or two types of receivers.

### Initial Access Procedure of RFID

In some protocols, it is introduced that the initial access procedure is adapted for the IoT system. FIG. 7 illustrates a schematic flowchart of the initial access procedure of the RFID, where the interrogator may be the network device introduced above. Referring to FIG. 7, the interrogator may initiate a Query to a tag, to trigger the tag to initiate the initial access procedure. Next, the tag transmits a 16-bit random number (denoted as "RN16") to the interrogator. During this process, in a case where there is another tag that transmits a random number at approximately the same time through the same channel, the first contention would happen during the reception process at the interrogator. In a case where the interrogator acknowledges a correctly decoded random number through an ACK, then for tags, the tag for which the contention resolution succeeds would receive a random number being the same as that transmitted by the tag, whereas the tag for which the contention resolution fails would receive a random number different from that transmitted by the tag.

For the tag for which the contention resolution succeeds, it may transmit its own EPC or related information to the interrogator. Accordingly, the interrogator feeds back the same random number (the one correctly decoded) repeatedly to the tag through a random number request (Req_RN). Next, the tag feeds back an identifier (handle) to the interrogator to be used as the identifier of the tag in subsequent processes, where the handle is also a 16-bit random number. Then, the interrogator may transmit a command to the tag, and the handle of the tag is signaled into the command.

In the above initial access procedure of the RFID, the handle used as the identifier of the tag in subsequent processes is generated by the tag itself. This type of manner is suitable for the RFID, since the coverage range of the interrogator is generally small, making the length of the handle sufficient to distinguish different RFID tags. However, this type of initial access procedure is not suitable for the scenario in which the coverage range of the network device is large, as the length of the handle may be inadequate for the network device to distinguish different terminal devices. However, the conventional random access procedure is too complicated, which may cause that the power consumption of the terminal device is relatively high. In this case, the extent of reducing the power consumption by introducing the reduced-capability terminal device (e.g., the electronic tag introduced preciously) is inhibited.

Therefore, to address the above problem, the embodiments of the present disclosure provide a wireless communication method for reducing the power consumption of the terminal device (also referred to as "the first terminal device") during the random access procedure. The wireless communication method according to the embodiments of the present disclosure is described below with reference to FIG. 8. In some implementations, the first terminal device may be a low-power consumption device. In some implementations, the first terminal device is the A-IoT device introduced above, for example, it may be the terminal device of the Type A; for another example, it may be the terminal device of the Type B; for another example, it may be the terminal device of the Type C. Certainly, in the embodiments of the present disclosure, the terminal device may also be a terminal device in the IoT system.

In some implementations, the target device illustrated in FIG. 8 may be the second terminal device, and in this case, the first terminal device may access the network through the second terminal device. That is, the second terminal device may act as an auxiliary node or an intermediate node for communication between the first terminal device and the network device, so as to help the first terminal device to access the network device. In other implementations, the target device may be a network device other than the network device to which the terminal device is preparing to access. That is, the network device acting as the target device may act as an auxiliary node or an intermediate node for communication between the first terminal device and the network device (a network device to which the terminal device attempts to access), so as to help the first terminal device to access the network device. Certainly, in the embodiments of the present disclosure, the target device may act as the network device to which the terminal device attempts to access, and in this case, the first terminal device may directly perform communication with the network device, to attempt to access the network device.

In the embodiments of the present disclosure, the network device may be a collective term for network nodes that include a reader. Certainly, the network device may only include a node that provides the backscattering radio wave to the first terminal device.

In the embodiments of the present disclosure, the first terminal device and the second terminal device are not limited. In some implementations, the capability of the second terminal device may be higher than that of the first terminal device. For example, the second terminal device may be a smart terminal device, and the first terminal device may be the electronic tag introduced above. In other implementations, the second terminal device and the first terminal device may be terminal devices that have comparable capabilities.

FIG. 8 is a schematic flowchart of a wireless communication method according to an embodiment of the present disclosure. The method illustrated in FIG. 8 includes operation S810 to operation S820.

In operation S810, a first terminal device transmits a first terminal device identifier to a target device.

In some implementations, the first terminal device identifier may be generated by the first terminal device. For example, the first terminal device identifier may be a random number generated by the first terminal device, which, compared with a terminal device identifier configured by a network device for a terminal device in a conventional random access procedure, has a relatively shorter length, thereby helping to reduce power consumption required for the first terminal device to transmit the first terminal device identifier. For example, the length of the first terminal device identifier may be 16 bits.

In some implementations, a transmission of the first terminal device identifier may serve as a first piece of information in the random access procedure. Therefore, information in which the first terminal device identifier is located may be referred to as a Message A (Msg A), for example, may be an Msg A in a 2-step random access procedure.

In some implementations, a time-domain resource for transmitting the first terminal device identifier may be randomly selected by the first terminal device.

In operation S820, the target device transmits first information to the first terminal device, where the first information includes a terminal device identifier received by the target device.

In some implementations, the first terminal device may, based on the terminal device identifier carried in the first information, compare with the first terminal device identifier, so as to determine whether access to the target device is successful to resolve a contention.

For example, in a case where the terminal device identifier in the first information is the same as the first terminal device identifier, the contention for the first terminal device is resolved and the target device is successfully accessed. For another example, in a case where the terminal device identifier in the first information is different from the first terminal device identifier, the contention resolution for the first terminal device fails.

In some implementations, the first information may further include a first radio network temporary identifier (RNTI) associated with the terminal device identifier received by the target device. Accordingly, in a case where the terminal device identifier in the first information is the same as the first terminal device identifier (or in other words, if the contention resolution for the first terminal device succeeds), the first terminal device may retain the first RNTI. In some scenarios, the first terminal device may perform communication with the target device based on the first RNTI, that is, using the first RNTI as an identifier of the first terminal device.

In the embodiments of the present disclosure, the first RNTI may be carried only in the first information. In this case, transmission of other information in the random access procedure may not be performed based on an RNTI, which, compared with a conventional RNTI-based random access procedure, helps to simplify the complexity for the first terminal device to access the target device and reduces the power consumption for the first terminal device to access the target device.

In addition, in the embodiments of the present disclosure, the first terminal device may first perform a random access to the network device based on the first terminal device identifier, and then indicate the first RNTI in the first information. Since the length of the first terminal device identifier is relatively shorter compared with that of the first RNTI, it helps reduce the power consumption of the first terminal device during the random access procedure.

In some scenarios, the access of the first terminal device to the target device may be because there is information to be transmitted (e.g., ambient temperature collected by the first terminal device). In a case where the information to be transmitted has already been transmitted to the network device during the process of the first terminal device accessing the target device, the network device may no longer carry the first RNTI in the first information to reduce the overhead of transmitting the first information.

In some implementations, the length of the first RNTI is adjustable, or in other words, the first RNTI has a variable length. For example, the length of the first RNTI may be associated with the number of terminal devices served by the network device. That is, if the number of terminal devices served by the network device serves is relatively large, the length of the first RNTI may be relatively long so as to facilitate differentiation among multiple terminal devices. Conversely, if the number of terminal devices served by the network device is relatively small, the length of the first RNTI may be relatively short so as to reduce the complexity for the first terminal device to perform communication based on the first RNTI.

Assuming that the network device is located in an outdoor scenario, in this case, the number of terminal devices served by the network device may be tens of thousands. In this case, the length of the first RNTI may need 4 bytes. Assuming that the network device is located in an indoor scenario, in this case, the number of terminal devices served by the network device may be only a few hundred. In this case, the length of the first RNTI may only need 2 bytes.

In the embodiments of the present disclosure, the variation in the length of the first RNTI is not limited. For example, the length of the first RNTI may be adjusted by using different encoding modes, or in other words, the network device may generate first RNTIs of different lengths by using different encoding modes. Certainly, in the embodiments of the present disclosure, the variation in the length of the first RNTI may be achieved through truncation processing. That is, an original RNTI of a uniform length may be generated first, and then the truncation processing may be adopted to the original RNTI to obtain the first RNTI.

As described above, the length of the first RNTI is variable. Therefore, to reduce the complexity for the first terminal device to obtain the first RNTI, the network device may indicate the length of the first RNTI to the first terminal device. In some implementations, the target device may configure the length of the first RNTI for the first terminal device via configuration information. That is, the target device may transmit the configuration information to the first terminal device, and the configuration information is used to configure the length of the first RNTI for the first terminal device.

In some implementations, the first terminal device may receive the first information within a first time period to increase the probability of successfully receiving the first information. A starting position of the first time period may be determined based on a transmission time of the first terminal device identifier (or in other words, a transmission time of fourth information).

For example, the starting position of the first time period is the transmission time of the first terminal device identifier. That is, after transmitting the first terminal device identifier, the first terminal device immediately enters the first time period to prepare for receiving the first information, which allows the first terminal device to receive power from other communication devices (e.g., a reader) during the first time period, so as to perform subsequent communication through backscattered radio waves.

For another example, the starting position of the first time period is separated from the transmission time of the first terminal device identifier by a first time interval. In other words, the starting position of the first time period is obtained by offsetting the first time interval in the direction of time lapsing by taking the transmission time of the first terminal device identifier as a start. That is, after transmitting the first terminal device identifier, the first terminal device re-enters the first time period after waiting for the first time interval, to prepare for receiving the first information, which helps the first terminal device to save power.

In the embodiments of the present disclosure, the implementation of the first time period is not limited. For example, the first time period may be represented by a time window. Certainly, the first time period may be represented by a timer.

In some implementations, in a case where the first information is not received within the first time period, the contention resolution for the first terminal device fails.

Generally, the first terminal device may support receiving a message within a bandwidth range, or support receiving a message in a channel. For the first terminal device that supports receiving the message in the channel, the first information may be a narrowband message transmitted in one channel to save the power consumption for the first terminal device to receive the first information.

In some implementations, the first information includes one or more of: information for indicating the first terminal device to access a network based on a backoff mechanism; and a parameter for the first terminal device to access a network based on a backoff mechanism.

Taking an example in which the first information includes the information for indicating the first terminal device to access the network based on the backoff mechanism, the first information is used to indicate that the backoff mechanism is supported during the process of the first terminal device accessing the network.

Taking an example in which the first information includes the above-mentioned parameter, in some implementations, the parameter is used to indicate a maximum number of times the first terminal device attempts to access the network. In some implementations, in a case where the first terminal device determines that the contention resolution fails and a number of times the first terminal device attempts to access the target device is less than the maximum number of times, the first terminal device may re-monitor second information.

In still other implementations, in a case where the first terminal device determines that the contention resolution fails and the number of times the first terminal device attempts to access the target device is greater than or equal to the maximum number of times, the first terminal device may determine that access to the target device fails.

In the embodiments of the present disclosure, in a case where the first terminal device determines that access to the target device fails, the first terminal device may not monitor the second information anymore, alternatively, the first terminal device may re-monitor the second information after a relatively long period of time, which is not limited in the embodiments of the present disclosure.

In some implementations, the first terminal device may set a counter to record the maximum number of times the first terminal device attempts to access the network. Accordingly, each time the first terminal device attempts to access the network, the counter is incremented by 1.

In still other implementations, the above-mentioned parameter is further used to indicate backoff time information for the first terminal device to re-attempt to access to the target device. In other words, the parameter is used to indicate a waiting time required for the first terminal device to re-attempt to access the target device. That is, a time interval between a time when the first terminal device initiates a next random access procedure and a time when the first terminal device initiates a current random access procedure is greater than or equal to a backoff time indicated by the parameter. In other words, the first terminal device re-monitors the second information at a first time point, and the first time point is a time point after a duration indicated by the backoff time information, taking a time point when the first terminal device determines that the contention resolution fails as a starting point.

In the embodiments of the present disclosure, the above-mentioned parameter may be a backoff time. Certainly, in the embodiments of the present disclosure, the parameter may be indication information used to indicate the backoff time. For example, the above-mentioned parameter may be an index for indicating the backoff time, which helps to reduce the bits occupied for indicating the backoff time.

In the conventional random access procedure, a network device generally transmits trigger information in a periodic form, to trigger the first terminal device to perform the random access procedure. However, this method of periodically triggering the random access procedure is unnecessary and may cause a lower utilization of transmission resources. For example, for the above-introduced terminal device of Type A or terminal device of Type B, their operating principle is based on backscattering. Therefore, before initiating any procedure, a reader generally transmits one or more messages to the terminal device so that the terminal device can perform backscattering based on the one or more messages transmitted by the reader. In this case, the one or more messages may achieve the function of triggering the random access procedure, and in this case, transmitting the trigger information in the periodic manner is obviously a waste of system resources.

Therefore, to address the above problem, the embodiments of the present disclosure provide a wireless communication method. In the method, the target device may transmit the second information to the first terminal device, to trigger the first terminal device to perform the random access procedure. Or in other words, the second information is used to trigger the first terminal device to transmit the first terminal device identifier, and the second information may be transmitted aperiodically. Certainly, if the above issue is not considered, the second information may be transmitted periodically.

For example, in a logistics delivery scenario, in a case where a network device needs to take inventory of objects in a warehouse, the network device may transmit the second information to electronic tags (as an example of first terminal device) on the objects. In this case, the second information may be understood as being triggered by the need to take inventory of the objects in the warehouse.

In some implementations, the second information may be information broadcasted within the bandwidth range so that multiple terminal devices are capable of receiving the second information.

In some implementations, a time-domain resource for transmitting the second information (also referred to as a "reference time-domain resource") may be used to determine the time-domain resource for transmitting the first terminal device identifier (also referred to as a "first time-domain resource"). In other words, the first time-domain resource is determined based on the reference time-domain resource.

In some implementations, the first time-domain resource is determined based on the reference time-domain resource and a resource configuration parameter. The resource configuration parameter is used to indicate one or more of: a time-domain offset between the reference time-domain resource and the first time-domain resource; a respective duration corresponding to each time-domain resource among multiple time-domain resources; a time interval between two adjacent time-domain resources in time domain among the multiple time-domain resources; and a count of time-domain resources of the multiple time-domain resources.

In some implementations, the time-domain offset between the reference time-domain resource and the first time-domain resource may be replaced with a time offset between a time corresponding to the reference time-domain resource and a time corresponding to the first time-domain resource.

In the embodiments of the present disclosure, the time-domain offset may include one of: a time-domain offset between a starting position of the reference time-domain resource and a starting position of the first time-domain resource, a time-domain offset between an ending position of the reference time-domain resource and an ending position of the first time-domain resource, a time-domain offset between the starting position of the reference time-domain resource and the ending position of the first time-domain resource, and a time-domain offset between the ending position of the reference time-domain resource and the starting position of the first time-domain resource.

In the embodiments of the present disclosure, the above-mentioned time offset may include one of: the time offset between the starting time of the reference time-domain resource and the starting time of the first time-domain resource, the time offset between the ending time of the reference time-domain resource and the ending time of the first time-domain resource, the time offset between the starting time of the reference time-domain resource and the ending time of the first time-domain resource, and the time offset between the ending time of the reference time-domain resource and the starting time of the first time-domain resource.

In the embodiments of the present disclosure, the implementation of the above-mentioned time-domain offset and/or time offset is not limited. For example, the time-domain offset and/or time offset may be represented by a period of time. For another example, the time-domain offset and/or time offset may be represented by the number of time-domain resources.

In some implementations, the multiple time-domain resources may be multiple time-domain resources available for transmitting a preamble, or in other words, the multiple time-domain resources are candidate time-domain resources for transmitting the preamble. The multiple time-domain resources include the first time-domain resource.

In some implementations, the time interval between two adjacent time-domain resources in the time domain among the multiple time-domain resources may be indicated by a parameter t3. The parameter t3 may be a duration between a starting time-domain position of one time-domain resource among the multiple time-domain resources and a staring time-domain position of a next time-domain resource. In this case, the first terminal device may determine the time interval based on a duration corresponding to one time-domain resource and the parameter t3. Certainly, in the embodiments of the present disclosure, the time interval may also be a duration between an ending time-domain position of one time-domain resource and a starting time-domain position of a next time-domain resource.

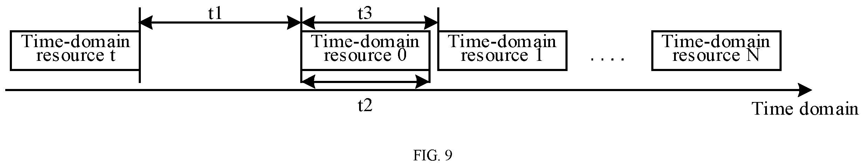

For ease of understanding, the indication manner of the first time-domain resource in the embodiments of the present disclosure is introduced below with reference to FIG. 9. As illustrated in FIG. 9, the multiple time-domain resources include a time-domain resource 0 to a time-domain resource N, and the reference time-domain resource is a time-domain resource t. The above-mentioned resource configuration parameter includes: t1 for indicating a time-domain offset between the reference time-domain resource and the first time-domain resource; a respective duration t2 corresponding to each time-domain resource among the multiple time-domain resources; and a time interval t3 between a starting position of the time-domain resource 0 and a starting position of a time-domain resource 1. Accordingly, the first terminal device may determine that the first time-domain resource is the time-domain resource 0 based on these parameters in the resource configuration parameter.

In some implementations, the resource configuration parameter is carried in the second information. Certainly, in the embodiments of the present disclosure, the resource configuration parameter may be pre-defined or pre-configured.

In some scenarios, to increase the success rate of accessing the target device by the first terminal device, the first terminal device may adopt a different transmit power when attempting to access the network each time. In some implementations, the transmit power used by the first terminal device may be increased during the process of multiple attempts by the first terminal device to access the target device. For example, the transmit power used by the first terminal device may be adjusted by a power step during the process of multiple attempts by the first terminal device to access the target device. For another example, during the process of multiple attempts by the first terminal device to access the target device, the transmit power used by the first terminal device may be obtained by adjusting based on the power step, on the basis of an initial transmit power. For example, if the power step is ΔP and the initial transmit power is P, then a transmit power used by the first terminal device for attempting to access the target device for the N-th time may be P_{N}, and P_{N} may be determined by the following formula: *P_{N}* = P + N × ΔP.

In some implementations, the initial transmit power may be used by the first terminal device for its first attempt to access the target device, and in this case, N is a positive integer greater than or equal to 0. Certainly, in the embodiments of the present disclosure, the transmit power used by the first terminal device for its first attempt to access the target device may be a sum of the initial transmit power and the power step, and in this case, N is a positive integer greater than or equal to 1.

In the embodiments of the present disclosure, the transmit power used by the first terminal device to attempt to access the target device may refer to a transmit power used by the first terminal device for transmitting the first terminal device identifier during the process of attempting to access the target device.

In some implementations, the above-mentioned parameters used for power adjustment (e.g., the initial transmit power and/or the power step) may be configured by the network device through the second information. Certainly, in the embodiments of the present disclosure, the above-mentioned parameters used for power adjustment (e.g., the initial transmit power and/or the power step) may be pre-defined or pre-configured.

In some implementations, before the operation S810, the method further includes: the first terminal device transmitting a preamble to the target device. The preamble is used for the target device to perform uplink time synchronization and/or uplink frequency synchronization.

In the embodiments of the present disclosure, to simplify the process of generating the preamble so as to reduce the power consumption required by the first terminal device to generate the preamble, the preamble may be fixed. Certainly, if the above issue is not considered, the preamble may be generated using a conventional manner.

In some implementations, during the process of attempting to access the target device by the first terminal device, the information transmitted by the network device to the first terminal device (e.g., the second information and/or the first information) may be transmitted within the bandwidth range or transmitted in a certain channel. Accordingly, the information transmitted by the first terminal device to the network device (e.g., the first terminal device identifier) may be transmitted in a certain channel.

In some implementations, an occasion for the first terminal device to transmit the information (e.g., the first terminal device identifier) is associated with a terminal type of the first terminal device. For example, for the terminal device of the Type A and/or the terminal device of the Type B, a time starting to transmit the information may be determined based on internal preparatory operations and whether or not external radio waves for backscattering exist. When the both are prepared well, the terminal device of the Type A and/or the terminal device of the Type B begins to transmit the message. For another example, for the terminal device of the Type C, the time starting to transmit the information may be determined based on the internal preparatory operations. That is, if the internal preparatory operations have been completed, the terminal device of the Type C may transmit the information.

In some cases, the target device may be unable to demodulate any of terminal device identifiers transmitted by multiple terminal devices (assuming that transmit powers used by the multiple terminal device to transmit the terminal device identifiers are similar). In this scenario, all of the multiple terminal devices fail to access the target device.

In other cases, it is possible that one terminal device identifier among the terminal device identifiers transmitted by the multiple terminal devices is successfully demodulated, while the remaining terminal device identifiers transmitted by the terminal devices fail to be demodulated. Assuming that the transmit powers used by the terminal device identifiers to transmit the terminal devices are different, then for the network device, a terminal device identifier transmitted with a maximum power may be successfully demodulated. In this situation, the terminal device identifier fed back by the network device in the first information is the terminal device identifier successfully demodulated. Terminal devices corresponding to other terminal identifiers that are not successfully demodulated fail to access because the first information fails to arrive for them.

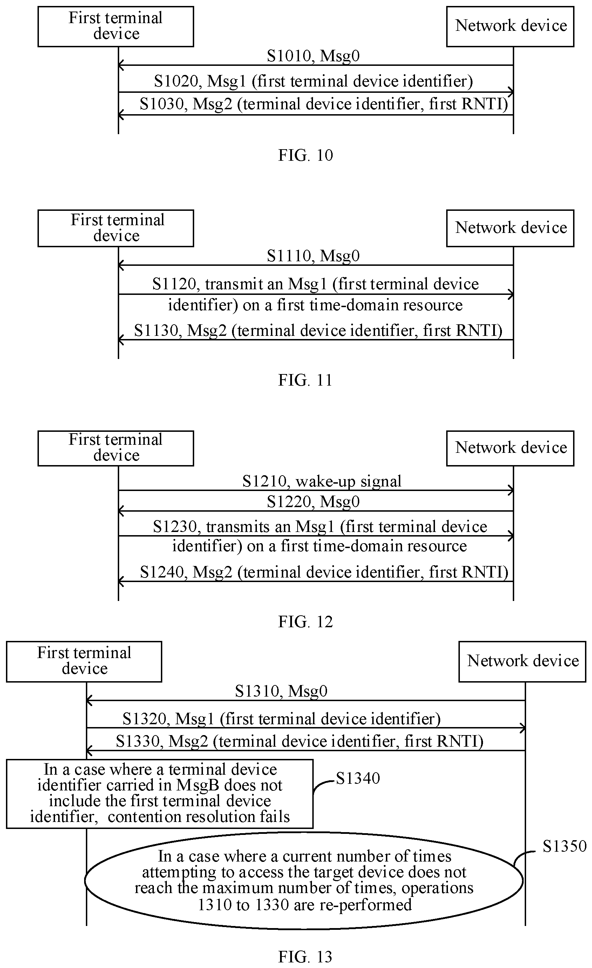

For ease of understanding, the random access method according to an embodiment of the present disclosure is introduced below with reference to FIG. 10 to FIG. 13. In the random access procedure introduced below, an Msg0 may serve as an example of the second information, an Msg1 may serve as an example of the information carrying the first terminal device identifier, and an Msg2 may serve as an example of the first information.

FIG. 10 is a schematic flowchart of the random access method according to an embodiment of the present disclosure. The method illustrated in FIG. 10 includes operation S1010 to operation S1030.

In operation S1010, a network device transmits an Msg0.

In some implementations, for the inventory purpose, the network device may broadcast the Msg0 on a certain frequency band to trigger multiple terminal devices to perform a random access, where the multiple terminal devices include a first terminal device.

In operation S1020, in response to the first terminal device receiving the Msg0, the first terminal device transmits an Msg1 to the network device.

In some implementations, the Msg1 includes a first terminal device identifier, where the terminal device identifier is a random number generated by the first terminal device.

In operation S1030, the network device transmits an Msg2 to the first terminal device.

In some implementations, the Msg2 includes a terminal device identifier received by the network device and a first RNTI corresponding to the terminal device identifier.

In some implementations, in a case where the terminal device identifier carried in the Msg2 includes the first terminal device identifier, the first terminal device may consider that contention resolution succeeds. Subsequently, the first terminal device may use the first RNTI as its own identifier and perform communication with the network device based on the first RNTI. In a case where the terminal device identifier carried in Msg2 does not include the first terminal device identifier, the first terminal device may consider that the contention resolution fails.

FIG. 11 is a schematic flowchart of a random access method according to another embodiment of the present disclosure. The method illustrated in FIG. 11 includes operation S1110 to operation S1130.

In operation S1110, a network device transmits an Msg0.

In some implementations, for the inventory purpose, the network device may broadcast the Msg0 on a certain frequency band to trigger multiple terminal devices to perform a random access, where the multiple terminal devices include a first terminal device.

In some implementations, the Msg0 may include a resource configuration parameter for determining a first time-domain resource, where the first time-domain resource may be used to transmit a first terminal device identifier. It should be understood that, for the determining manner of the first time-domain resource, refer to that illustrated in FIG. 9, which will not be repeated here for brevity.

In operation S1120, in response to the first terminal device receiving the Msg0, the first terminal device transmits an Msg1 to the network device on the first time-domain resource.

In some implementations, the Msg1 includes the first terminal device identifier, where the terminal device identifier is a random number generated by the first terminal device.

In operation S1130, the network device transmits an Msg2 to the first terminal device.

In some implementations, the Msg2 includes a terminal device identifier received by the network device and a first RNTI corresponding to the terminal device identifier.

In some implementations, in a case where the terminal device identifier carried in the Msg2 includes the first terminal device identifier, the first terminal device may consider that contention resolution succeeds. Subsequently, the first terminal device may use the first RNTI as its own identifier and perform communication with the network device based on the first RNTI. In a case where the terminal device identifier carried in the Msg2 does not include the first terminal device identifier, the first terminal device may consider that the contention resolution fails.

FIG. 12 is a schematic flowchart of a random access method according to another embodiment of the present disclosure. Assuming that the first terminal device is the above-introduced terminal device of the Type C, a terminal device of this type of may autonomously select a channel to transmit information. In some scenarios, the first terminal device of this type may operate in an FDD frequency band. The method illustrated in FIG. 12 includes operation S1210 to operation S1240.

In operation S1210, the first terminal device transmits a wake-up signal to a network device to wake up the network device.

In some implementations, in a case where the network device requires the first terminal device to actively transmit information (if the first terminal device is a sensor for detecting the temperature, the information actively transmitted by the first terminal device includes temperature information), since the network device does not know a time when the first terminal device initiates a random access procedure, the network device generally broadcasts an Msg0 periodically to trigger the first terminal device to perform a random access. However, periodically broadcasting the Msg0 causes consumption of system power and bandwidth. In this case, if there is no terminal device that needs to initiate a random access procedure, the network device may stop broadcasting the Msg0. If there is a terminal device that needs to initiate a random access procedure but does not discover the Msg0, the first terminal device may transmit the wake-up signal to the network device to trigger the network device to transmit the Msg0.

In operation S1220, in response to the wake-up signal, the network device transmits the Msg0.

In some implementations, the network device may broadcast the Msg0 on a certain frequency band to trigger multiple terminal devices to perform a random access, where the multiple terminal devices include the first terminal device.

In operation S1230, in response to the first terminal device receiving the Msg0, the first terminal device transmits an Msg1 to the network device.

In some implementations, the first terminal device may randomly select a time-domain resource for transmitting the Msg1.

In some implementations, the Msg1 includes the first terminal device identifier, where the terminal device identifier is a random number generated by the first terminal device.

In operation S1240, the network device transmits an Msg2 to the first terminal device.

In some implementations, the Msg2 includes a terminal device identifier received by the network device and a first RNTI corresponding to the terminal device identifier.

In some implementations, in a case where the terminal device identifier carried in the Msg2 includes the first terminal device identifier, the first terminal device may consider that contention resolution succeeds. Subsequently, the first terminal device may use the first RNTI as its own identifier and perform communication with the network device based on the first RNTI. In a case where the terminal device identifier carried in the Msg2 does not include the first terminal device identifier, the first terminal device may consider that the contention resolution fails.

FIG. 13 is a schematic flowchart of a random access method according to another embodiment of the present disclosure. The method illustrated in FIG. 13 includes operation S1310 to operation S1350.

In operation S1310, a network device transmits an Msg0.

In some implementations, the network device may broadcast the Msg0 on a certain frequency band to trigger multiple terminal devices to perform a random access, where the multiple terminal devices include a first terminal device.

In some implementations, the Msg0 may include a resource configuration parameter for determining a first time-domain resource, where the first time-domain resource may be used to transmit an Msg1. It should be understood that, for the determining manner of the first time-domain resource, refer to that illustrated in FIG. 9, which will not repeated here for brevity. Certainly, in the embodiments of the present disclosure, the Msg0 may also include a frequency-domain resource for transmitting the Msg1.

In operation S1320, in response to the first terminal device receiving the Msg0, the first terminal device transmits an Msg1 to the network device.

In some implementations, a time-domain resource in which the first terminal device transmits the Msg1 may be determined based on a time-domain resource of the Msg0; in other words, the first terminal device transmits the Msg1 on a transmission resource (time-domain resource and/or frequency-domain resource) indicated by the Msg0.

In some implementations, the Msg1 includes a first terminal device identifier, where the first terminal device identifier is a random number generated by the first terminal device.

In some implementations, the Msg1 may include: information for indicating the first terminal device to access a network based on a backoff mechanism; and a parameter for the first terminal device to access a network based on a backoff mechanism (for example, a maximum number of times the first terminal device attempts to access a target device).

In operation S1330, in response to the network device receiving the terminal device identifier, the network device transmits an Msg2.

In some implementations, the Msg2 includes the terminal device identifier received by the network device and the first RNTI corresponding to the terminal device identifier.

In some implementations, in a case where the terminal device identifier carried in the Msg2 includes the first terminal device identifier, the first terminal device may consider that contention resolution succeeds. Subsequently, the first terminal device may use the first RNTI as its own identifier and perform communication with the network device based on the first RNTI. In a case where the terminal device identifier carried in the Msg2 does not include the first terminal device identifier, the first terminal device may consider that the contention resolution fails (that is, refer to operation S1340).

In operation S1350, in a case where a current number of times the first terminal device attempts to access the target device does not reach the maximum number of times, the first terminal device may continue attempting to access the target device, that is, re-performing the operation S1310 to the operation S1340.

In some implementations, in a case where the operation S1310 to the operation S1340 is re-performed, a time-domain resource for the first terminal device to transmit the first terminal device identifier may be autonomously selected by the first terminal device.

In some implementations, in a case where the re-performing of the operation S1310 to the operation S1340 is an N-th time the first terminal device attempts to access the target device, and the Msg1 carries a parameter for adjusting a transmit power, e.g., a power step ΔP and an initial transmit power P, a transmit power used by the first terminal device for attempting to access the target device for the N-th time may be *P_{N}*, where *P_{N}* may be determined by the following formula: *P_{N}* = P + N × ΔP.

It should be noted that the transmit power *P_{N}* may be used to transmit the Msg1 during the process of attempting to access the target device by the first terminal device for the N-th time.

In the embodiments of the present disclosure, the time-domain resource is not limited. For example, the time-domain resource may be a slot, a subframe, a mini-subframe, or a symbol, etc. certainly, in the embodiments of the present disclosure, the time-domain resource may also be other time-domain resources newly introduced in a future communication system.

In addition, in the embodiments of the present disclosure, the terms "accessing a network," "accessing a network device," "accessing a target device," and "random access" may be replaced with each other.

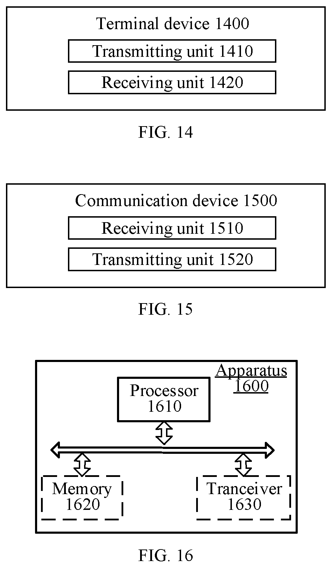

The method embodiments of the present disclosure are described in detail above with reference to FIG. 1 to FIG. 13. The apparatus embodiments of the present disclosure are described in detail below with reference to FIG. 14 to FIG. 16. It should be understood that the descriptions of the method embodiments and the apparatus embodiments correspond to each other. Therefore, for parts not described in detail, reference can be made to the above method embodiments.

FIG. 14 is a schematic diagram of a terminal device according to an embodiment of the present disclosure. The terminal device 1400 illustrated in FIG. 14 is a first terminal device, and the first terminal device includes: a transmitting unit 1410 and a receiving unit 1420.

The transmitting unit 1410 is configured to transmit a first terminal device identifier to a target device.

The receiving unit 1420 is configured to receive first information transmitted by the target device, the first information including a terminal device identifier received by the target device, where the target device includes a network device and/or a second terminal device.

In some implementations, the terminal device further includes: a first processing unit, configured to determine that contention resolution succeeds in a case where the terminal device identifier in the first information is the same as the first terminal device identifier; and/or a second processing unit, configured to determine that contention resolution fails in a case where the terminal device identifier in the first information is different from the first terminal device identifier.

In some implementations, the first terminal device identifier is generated by the first terminal device.

In some implementations, the receiving unit is configured to receive second information transmitted by the target device, where the second information is used to trigger the first terminal device to transmit the first terminal device identifier, the second information being information transmitted aperiodically, or the second information being information transmitted periodically.

In some implementations, a first time-domain resource in which the first terminal device identifier is transmitted is determined based on a reference time-domain resource, the reference time-domain resource being used to receive the second information.

In some implementations, the first time-domain resource is determined based on the reference time-domain resource and a resource configuration parameter, the resource configuration parameter being used to indicate one or more of: a time-domain offset between the reference time-domain resource and the first time-domain resource; a respective duration corresponding to each time-domain resource among multiple time-domain resources, the multiple time-domain resources including the first time-domain resource; a time interval between two adjacent time-domain resources in time domain among the multiple time-domain resources; and a count of time-domain resources of the multiple time-domain resources.

In some implementations, the resource configuration parameter is carried in the second information.

In some implementations, the second information includes a power adjustment parameter, the power adjustment parameter being used to adjust a transmit power of the first terminal device identifier.

In some implementations, a time-domain resource for transmitting the first terminal device identifier is randomly selected by the first terminal device.

In some implementations, the first information further includes a first radio network temporary identifier (RNTI) associated with the terminal device identifier.

In some implementations, the first terminal device further includes a third processing unit, configured to retain the first RNTI in a case where the first terminal device determines that contention resolution succeeds.

In some implementations, the receiving unit is further configured to receive configuration information transmitted by the target device, where the configuration information is used to configure a length of the first RNTI for the first terminal device.

In some implementations, the first information further includes: information for indicating the first terminal device to access a network based on a backoff mechanism; and/or a parameter for the first terminal device to perform a backoff mechanism.

In some implementations, in a case where the first information includes the parameter, the parameter is used to indicate a maximum number of times the first terminal device attempts to access the target device; and/or backoff time information for the first terminal device to re-attempt to access the target device.

In some implementations, in a case where the parameter is used to indicate the maximum number of times, the receiving unit is configured to re-monitor second information in a case where the first terminal device determines that contention resolution fails and a number of times the first terminal device attempts to access the target device is less than the maximum number of times.

In some implementations, in a case where the parameter is used to indicate the maximum number of times, the terminal device further includes a fourth processing unit, configured to determine that access to the target device fails in a case where the first terminal device determines that contention resolution fails and a number of times the first terminal device attempts to access the target device is greater than or equal to the maximum number of times.

In some implementations, in a case where the parameter is used to indicate the backoff time information, the receiving unit is configured to re-monitor second information at a first time point, where the first time point is a time point after a backoff time indicated by the backoff time information, taking a time point when the first terminal device determines that contention resolution fails as a starting time point.

In some implementations, the first information carries multiple terminal device identifiers and a respective RNTI associated with each terminal device identifier among the multiple terminal device identifiers, the multiple terminal device identifiers including the first terminal device identifier.

In some implementations, the first information is carried on a broadcast channel.

In some implementations, the first terminal device receives the first information within a first time period, and a starting position of the first time period is determined based on a transmission time of the first terminal device identifier.

In some implementations, the starting position of the first time period is the transmission time of the first terminal device identifier, or the starting position of the first time period is separated from the transmission time of the first terminal device identifier by a first time interval.

In some implementations, the first terminal device further includes a fifth processing unit, configured to determine that contention resolution fails in a case where the first information is not received within the first time period.

In some implementations, before the first terminal device transmits the first terminal device identifier to the target device, the transmitting unit is further configured to transmit a preamble to the target device, where the preamble is used for the target device to perform uplink time synchronization and/or uplink frequency synchronization.

FIG. 15 is a schematic diagram of a communication device according to an embodiment of the present disclosure. The communication device 1500 illustrated in FIG. 15 is a target device, and the communication device 1500 includes: a receiving unit 1510 and a transmitting unit 1520.

The receiving unit 1510 is configured to receive a first terminal device identifier transmitted by a first terminal device.

The transmitting unit 1520 is configured to transmit first information, the first information including a terminal device identifier received by the target device, where the target device includes a network device and/or a second terminal device.

In some implementations, in a case where the terminal device identifier contained in the first information is the same as the first terminal device identifier, contention resolution for the first terminal device succeeds; and/or in a case where the terminal device identifier contained in the first information is different from the first terminal device identifier, contention resolution for the first terminal device fails.

In some implementations, the first terminal device identifier is generated by the first terminal device.

In some implementations, the transmitting unit is configured to transmit second information to the first terminal device, where the second information is used to trigger the first terminal device to transmit the first terminal device identifier, the second information being information transmitted aperiodically, or the second information being information transmitted periodically.

In some implementations, a first time-domain resource in which the first terminal device identifier is received is determined based on a reference time-domain resource, the reference time-domain resource being used to transmit the second information.

In some implementations, the first time-domain resource is determined based on the reference time-domain resource and a resource configuration parameter, the resource configuration parameter being used to indicate one or more of: a time-domain offset between the reference time-domain resource and the first time-domain resource; a respective duration corresponding to each time-domain resource among multiple time-domain resources, the multiple time-domain resources including the first time-domain resource; a time interval between two adjacent time-domain resources in time domain among the multiple time-domain resources; and a count of time-domain resources of the multiple time-domain resources.

In some implementations, the resource configuration parameter is carried in the second information.

In some implementations, the second information includes a power adjustment parameter, the power adjustment parameter being used to adjust a transmit power of the first terminal device identifier.

In some implementations, a time-domain resource for transmitting the first terminal device identifier is randomly selected by the first terminal device.

In some implementations, the first information further includes a first radio network temporary identifier (RNTI) associated with the terminal device identifier.

In some implementations, the transmitting unit is further configured to transmit configuration information to the first terminal device, where the configuration information is used to configure a length of the first RNTI for the first terminal device.

In some implementations, the first information further includes: information for indicating the first terminal device to access a network based on a backoff mechanism; and/or a parameter for the first terminal device to perform a backoff mechanism.

In some implementations, in a case where the first information includes the parameter, the parameter is used to indicate a maximum number of times the first terminal device attempts to access the target device; and/or backoff time information for the first terminal device to re-attempt to access the target device.

In some implementations, in a case where the parameter is used to indicate the maximum number of times, when contention resolution for the first terminal device fails and a number of times the first terminal device attempts to access the target device is greater than or equal to the maximum number of times, access of the first terminal device to the target device fails.

In some implementations, in a case where the parameter is used to indicate the backoff time information, the first terminal device re-monitors second information at a first time point, where the first time point is a time point after a backoff time indicated by the backoff time information, taking a time point when contention resolution for the first terminal device fails as a starting time point.

In some implementations, the first information carries multiple terminal device identifiers and a respective RNTI associated with each terminal device identifier among the multiple terminal device identifiers, the multiple terminal device identifiers including the first terminal device identifier.

In some implementations, the first information is carried on a broadcast channel.

In some implementations, the first terminal device receives the first information within a first time period, and a starting position of the first time period is determined based on a transmission time of the first terminal device identifier.

In some implementations, the starting position of the first time period is the transmission time of the first terminal device identifier, or the starting position of the first time period is separated from the transmission time of the first terminal device identifier by a first time interval.

In some implementations, in a case where the first information is not received within the first time period, contention resolution for the first terminal device fails.

In some implementations, before the target device receives the first terminal device identifier transmitted by the first terminal device, the receiving unit is further configured to receive a preamble transmitted by the first terminal device, where the preamble is used for the target device to perform uplink time synchronization and/or uplink frequency synchronization.

In an optional embodiment, the transmitting unit 1410 and the receiving unit 1420 may be a transceiver 1630. The terminal device 1400 may also include a processor 1610 and a memory 1620, as specifically shown in FIG. 16.

In an optional embodiment, the transmitting unit 1510 and the receiving unit 1520 may be a transceiver 1630. The communication device 1500 may also include a processor 1610 and a memory 1620, as specifically shown in FIG. 16.

FIG. 16 is a schematic diagram of a communication apparatus according to the embodiments of the present disclosure. The dashed lines in FIG. 16 indicate that a unit or module is optional. An apparatus 1600 may be used to implement the method described in the above method embodiments. The apparatus 1600 may be a chip, a terminal device or a network device.

The apparatus 1600 may include one or more processors 1610. The processor 1610 may support the apparatus 1600 to implement the method described in the above method embodiments. The processor 1610 may be a general-purpose processor or a dedicated-purpose processor. For example, the processor may be a central processing unit (CPU). Alternatively, the processor may be other general-purpose processors, a digital signal processor (DSP), an application specific integrated circuit (ASIC), a field programmable gate array (FPGA) or other programmable logic devices, discrete gates or transistor logic devices, discrete hardware components, etc. The general-purpose processor may be a microprocessor, or the processor may be any conventional processor or the like.

The apparatus 1600 may further include one or more memories 1620. The memory 1620 stores a program thereon, and the program may be executed by the processor 1610, to enable the processor 1610 to perform the method in the above method embodiments of the present disclosure. The memory 1620 may be independent of the processor 1610, or may be integrated into the processor 1610.

The apparatus 1600 may further include a transceiver 1630. The processor 1610 may communicate with other devices or chips via the transceiver 1630. For example, the processor 3010 may transmit and receive data with other devices or chips via the transceiver 1630.

The embodiments of the present disclosure further provide a computer-readable storage medium for storing a program. The computer-readable storage medium may be applied to the terminal or the network device provided in the embodiments of the present disclosure, and the program enables a computer to perform the method performed by the terminal or the network device in various embodiments of the present disclosure.

The embodiments of the present disclosure further provide a computer program product. The computer program product includes a program. The computer program product may be applied to the terminal or the network device provided in the embodiments of the present disclosure, and the program enables a computer to perform the method performed by the terminal or the network device in various embodiments of the present disclosure.

The embodiments of the present disclosure further provide a computer program. The computer program may be applied to the terminal or the network device provided in the embodiments of the present disclosure, and the computer program enables a computer to perform the method performed by the terminal or the network device in various embodiments of the present disclosure.

It should be understood that the terms "system" and "network" may be used interchangeably in the present disclosure. In addition, the terms used in the present disclosure are only used to explain the specific embodiments of the present disclosure and are not intended to limit the present disclosure. The terms "first," "second," "third," "fourth" and the like in the specification, claims and drawings of the present disclosure are used to distinguish different objects rather than to describe a specific order. In addition, the terms "includes/comprises," "has," and any variations thereof, are intended to cover a non-exclusive inclusion.

In the embodiments of the present disclosure, the term "indicate/indicated/indicating/indication" mentioned may be a direct indication, may also be an indirect indication, or may mean that there is an association relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an association relationship between A and B.

In the embodiments of the present disclosure, "B corresponding to A" means that B is associated with A, and B can be determined based on A. However, it should also be understood that determining B based on A does not mean determining B based solely based on A. B may also be determined based on A and/or other information.

In the embodiments of the present disclosure, the term "correspond/corresponding/correspondence" may mean that there is a direct or indirect correspondence between two elements, may also mean that there is an associated relationship between the two elements, or may also mean a relationship of indicating and being indicated or a relationship of configuring and being configured, etc.

In the embodiments of the present disclosure, "pre-defined" or "pre-configured" may be implemented by pre-saving corresponding codes, tables or other manners that may be used to indicate related information in devices (e.g., including a terminal device and a network device), and a specific implementation manner thereof is not limited in the present disclosure. For example, the pre-defined may refer to what is defined in a protocol.

In the embodiments of the present disclosure, the "protocol" may refer to a standard protocol in the communication field. For example, the "protocol" may include an LTE protocol, an NR protocol, and a related protocol used in a future communication system, which is not limited in the present disclosure.

In the embodiments of the present disclosure, the term "and/or" herein is only an association relationship to describe associated objects, which indicates that there may be three kinds of relationships. For example, "A and/or B" may mean three cases where: A exists alone, both A and B exist, and B exists alone. In addition, a character "/" herein generally means that associated objects before and after "/" are in an "or" relationship.

In various embodiments of the present disclosure, values of serial numbers of the processes do not mean the order of execution. The execution order of each process should be determined by its function and internal logic, and should not constitute any limitation on the implementation process of the embodiments of the present disclosure.

In several embodiments provided in the present disclosure, it should be understood that the disclosed systems, apparatuses, and methods may be implemented in other manners. For example, the apparatus embodiments described above are merely exemplary. For example, a division of units is merely a division based on a logical function and there may be other division manners in actual implementations. For example, multiple units or components may be combined or integrated into another system, or some characteristics may be omitted or not be performed. In addition, coupling, direct coupling or communication connection between each other displayed or discussed may be indirect coupling or communication connection via some interfaces, apparatuses or units, which may be electrical, mechanical or in other forms.

The units described as separate components may be or may not be physically separated, and the components displayed as units may be or may not be physical units. That is, they may be located in a place or distributed over multiple network units. Some or all of the units may be selected according to actual needs to achieve the purpose of the solutions of the embodiments.

In addition, various function units in various embodiments of the present disclosure may be integrated into one processing unit, or various units may exist physically separately, or two or more units may be integrated into one unit.

All or some of the above embodiments may be implemented by software, hardware, firmware or any combination thereof. When implemented using software, all or some of the embodiments may be implemented in the form of a computer program product. The computer program product includes one or more computer instructions. When the computer program instructions are loaded and executed on a computer, all or some procedures or functions described in the embodiments of the present disclosure are generated. The computer may be a general-purpose computer, a dedicated-purpose computer, a computer network, or other programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center via a wired manner (e.g., a coaxial cable, an optical fiber, a digital subscriber line (DSL)) or a wireless manner (e.g., an infrared or radio manner, microwave, etc.). The computer-readable storage medium may be any available medium that may be read by a computer or a data storage device such as a server or a data center that integrates one or more available medium. The available medium may be a magnetic medium (e.g., a floppy disk, a hard disk, a magnetic tape), an optical medium (e.g., digital versatile disc (a digital video disc, DVD)), or a semiconductor medium (e.g., a solid state disk (SSD)).

The above description is only specific implementations of the present disclosure, but the protection scope of the present disclosure is not limited thereto. Any person skilled in the art familiar with the technical field may easily think of changes or substitutions within the technical scope disclosed in the present disclosure, all of which should be included in the protection scope of the present disclosure. Therefore, the protection scope of the present disclosure shall be subject to the protection scope of the claims.

## Claims

1. A wireless communication method, comprising:
transmitting, by a first terminal device, a first terminal device identifier to a target device; and
receiving, by the first terminal device, first information transmitted by the target device, the first information comprising a terminal device identifier received by the target device,
wherein the target device comprises a network device and/or a second terminal device.

2. The method according to claim 1, further comprising:
determining, by the first terminal device, that contention resolution succeeds in a case where the terminal device identifier in the first information is the same as the first terminal device identifier; and/or
determining, by the first terminal device, that contention resolution fails in a case where the terminal device identifier in the first information is different from the first terminal device identifier.

3. The method according to claim 1 or 2, wherein the first terminal device identifier is generated by the first terminal device.

4. The method according to any one of claims 1 to 3, further comprising:
receiving, by the first terminal device, second information transmitted by the target device, wherein the second information is used to trigger the first terminal device to transmit the first terminal device identifier, the second information being information transmitted aperiodically, or the second information being information transmitted periodically.

5. The method according to claim 4, wherein a first time-domain resource in which the first terminal device identifier is transmitted is determined based on a reference time-domain resource, the reference time-domain resource being used to receive the second information.

6. The method according to claim 5, wherein the first time-domain resource is determined based on the reference time-domain resource and a resource configuration parameter, the resource configuration parameter being used to indicate one or more of:
a time-domain offset between the reference time-domain resource and the first time-domain resource;
a respective duration corresponding to each time-domain resource among a plurality of time-domain resources, the plurality of time-domain resources comprising the first time-domain resource;
a time interval between two adjacent time-domain resources in time domain among the plurality of time-domain resources; and
a count of time-domain resources of the plurality of time-domain resources.

7. The method according to claim 6, wherein the resource configuration parameter is carried in the second information.

8. The method according to any one of claims 4 to 7, wherein the second information comprises a power adjustment parameter, the power adjustment parameter being used to adjust a transmit power of the first terminal device identifier.

9. The method according to any one of claims 1 to 4, wherein a time-domain resource for transmitting the first terminal device identifier is randomly selected by the first terminal device.

10. The method according to any one of claims 1 to 9, wherein the first information further comprises a first radio network temporary identifier (RNTI) associated with the terminal device identifier.

11. The method according to claim 10, further comprising:
retaining, by the first terminal device, the first RNTI in a case where the first terminal device determines that contention resolution succeeds.

12. The method according to claim 10 or 11, further comprising:
receiving, by the first terminal device, configuration information transmitted by the target device, wherein the configuration information is used to configure a length of the first RNTI for the first terminal device.

13. The method according to any one of claims 1 to 12, wherein the first information further comprises:
information for indicating the first terminal device to access a network based on a backoff mechanism; and/or
a parameter for the first terminal device to perform a backoff mechanism.

14. The method according to claim 13, wherein in a case where the first information comprises the parameter, the parameter is used to indicate a maximum number of times the first terminal device attempts to access the target device; and/or
backoff time information for the first terminal device to re-attempt to access the target device.

15. The method according to claim 14, wherein in a case where the parameter is used to indicate the maximum number of times, the method further comprises:
re-monitoring, by the first terminal device, second information in a case where the first terminal device determines that contention resolution fails and a number of times the first terminal device attempts to access the target device is less than the maximum number of times.

16. The method according to claim 14 or 15, wherein in a case where the parameter is used to indicate the maximum number of times, the method further comprises:
determining, by the first terminal device, that access to the target device fails in a case where the first terminal device determines that contention resolution fails and a number of times the first terminal device attempts to access the target device is greater than or equal to the maximum number of times.

17. The method according to claim 14, wherein in a case where the parameter is used to indicate the backoff time information, the method further comprises:
re-monitoring, by the first terminal device, second information at a first time point, wherein the first time point is a time point after a backoff time indicated by the backoff time information, taking a time point when the first terminal device determines that contention resolution fails as a starting time point.

18. The method according to any one of claims 1 to 17, wherein the first information carries a plurality of terminal device identifiers and a respective RNTI associated with each terminal device identifier among the plurality of terminal device identifiers, the plurality of terminal device identifiers comprising the first terminal device identifier.

19. The method according to any one of claims 1 to 18, wherein the first information is carried on a broadcast channel.

20. The method according to any one of claims 1 to 19, wherein the first terminal device receives the first information within a first time period, and a starting position of the first time period is determined based on a transmission time of the first terminal device identifier.

21. The method according to claim 20, wherein the starting position of the first time period is the transmission time of the first terminal device identifier, or
the starting position of the first time period is separated from the transmission time of the first terminal device identifier by a first time interval.

22. The method according to claim 20 or 21, further comprising:
determining, by the first terminal device, that contention resolution fails in a case where the first information is not received within the first time period.

23. The method according to any one of claims 1 to 22, wherein before transmitting, by the first terminal device, the first terminal device identifier to the target device, the method further comprises:
transmitting, by the first terminal device, a preamble to the target device, wherein the preamble is used for the target device to perform uplink time synchronization and/or uplink frequency synchronization.

24. A wireless communication method, comprising:
receiving, by a target device, a first terminal device identifier transmitted by a first terminal device; and
transmitting, by the target device, first information, the first information comprising a terminal device identifier received by the target device,
wherein the target device comprises a network device and/or a second terminal device.

25. The method according to claim 24, wherein in a case where the terminal device identifier contained in the first information is the same as the first terminal device identifier, contention resolution for the first terminal device succeeds; and/or
in a case where the terminal device identifier contained in the first information is different from the first terminal device identifier, contention resolution for the first terminal device fails.

26. The method according to claim 24 or 25, wherein the first terminal device identifier is generated by the first terminal device.

27. The method according to any one of claims 24 to 26, further comprising:
transmitting, by the target device, second information to the first terminal device, wherein the second information is used to trigger the first terminal device to transmit the first terminal device identifier, the second information being information transmitted aperiodically, or the second information being information transmitted periodically.

28. The method according to claim 27, wherein a first time-domain resource in which the first terminal device identifier is received is determined based on a reference time-domain resource, the reference time-domain resource being used to transmit the second information.

29. The method according to claim 28, wherein the first time-domain resource is determined based on the reference time-domain resource and a resource configuration parameter, the resource configuration parameter being used to indicate one or more of:
a time-domain offset between the reference time-domain resource and the first time-domain resource;
a respective duration corresponding to each time-domain resource among a plurality of time-domain resources, the plurality of time-domain resources comprising the first time-domain resource;
a time interval between two adjacent time-domain resources in time domain among the plurality of time-domain resources; and
a count of time-domain resources of the plurality of time-domain resources.

30. The method according to claim 29, wherein the resource configuration parameter is carried in the second information.

31. The method according to any one of claims 27 to 30, wherein the second information comprises a power adjustment parameter, the power adjustment parameter being used to adjust a transmit power of the first terminal device identifier.

32. The method according to any one of claims 24 to 27, wherein a time-domain resource for transmitting the first terminal device identifier is randomly selected by the first terminal device.

33. The method according to any one of claims 24 to 32, wherein the first information further comprises a first radio network temporary identifier (RNTI) associated with the terminal device identifier.

34. The method according to claim 32 or 33, further comprising:
transmitting, by the target device, configuration information to the first terminal device, wherein the configuration information is used to configure a length of the first RNTI for the first terminal device.

35. The method according to any one of claims 24 to 34, wherein the first information further comprises:
information for indicating the first terminal device to access a network based on a backoff mechanism; and/or
a parameter for the first terminal device to perform a backoff mechanism.

36. The method according to claim 35, wherein in a case where the first information comprises the parameter, the parameter is used to indicate a maximum number of times the first terminal device attempts to access the target device; and/or
backoff time information for the first terminal device to re-attempt to access the target device.

37. The method according to claim 36, wherein in a case where the parameter is used to indicate the maximum number of times, when contention resolution for the first terminal device fails and a number of times the first terminal device attempts to access the target device is greater than or equal to the maximum number of times, access of the first terminal device to the target device fails.

38. The method according to claim 36, wherein in a case where the parameter is used to indicate the backoff time information, the first terminal device re-monitors second information at a first time point, wherein the first time point is a time point after a backoff time indicated by the backoff time information, taking a time point when contention resolution for the first terminal device fails as a starting time point.

39. The method according to any one of claims 24 to 38, wherein the first information carries a plurality of terminal device identifiers and a respective RNTI associated with each terminal device identifier among the plurality of terminal device identifiers, the plurality of terminal device identifiers comprising the first terminal device identifier.

40. The method according to any one of claims 24 to 39, wherein the first information is carried on a broadcast channel.

41. The method according to any one of claims 24 to 40, wherein the first terminal device receives the first information within a first time period, and a starting position of the first time period is determined based on a transmission time of the first terminal device identifier.

42. The method according to claim 41, wherein the starting position of the first time period is the transmission time of the first terminal device identifier, or
the starting position of the first time period is separated from the transmission time of the first terminal device identifier by a first time interval.

43. The method according to claim 41 or 42, wherein in a case where the first information is not received within the first time period, contention resolution for the first terminal device fails.

44. The method according to any one of claims 24 to 43, wherein before receiving, by the target device, the first terminal device identifier transmitted by the first terminal device, the method further comprises:
receiving, by the target device, a preamble transmitted by the first terminal device, wherein the preamble is used for the target device to perform uplink time synchronization and/or uplink frequency synchronization.

45. A terminal device, the terminal device being a first terminal device and comprising:
a transmitting unit, configured to transmit a first terminal device identifier to a target device; and
a receiving unit, configured to receive first information transmitted by the target device, the first information comprising a terminal device identifier received by the target device,
wherein the target device comprises a network device and/or a second terminal device.

46. The terminal device according to claim 45, further comprising:
a first processing unit, configured to determine that contention resolution succeeds in a case where the terminal device identifier in the first information is the same as the first terminal device identifier; and/or
a second processing unit, configured to determine that contention resolution fails in a case where the terminal device identifier in the first information is different from the first terminal device identifier.

47. The terminal device according to claim 45 or 46, wherein the first terminal device identifier is generated by the first terminal device.

48. The terminal device according to any one of claims 45 to 47, wherein the receiving unit is configured to receive second information transmitted by the target device, wherein the second information is used to trigger the first terminal device to transmit the first terminal device identifier, the second information being information transmitted aperiodically, or the second information being information transmitted periodically.

49. The terminal device according to claim 48, wherein a first time-domain resource in which the first terminal device identifier is transmitted is determined based on a reference time-domain resource, the reference time-domain resource being used to receive the second information.

50. The terminal device according to claim 49, wherein the first time-domain resource is determined based on the reference time-domain resource and a resource configuration parameter, the resource configuration parameter being used to indicate one or more of:
a time-domain offset between the reference time-domain resource and the first time-domain resource;
a respective duration corresponding to each time-domain resource among a plurality of time-domain resources, the plurality of time-domain resources comprising the first time-domain resource;
a time interval between two adjacent time-domain resources in time domain among the plurality of time-domain resources; and
a count of time-domain resources of the plurality of time-domain resources.

51. The terminal device according to claim 50, wherein the resource configuration parameter is carried in the second information.

52. The terminal device according to any one of claims 48 to 51, wherein the second information comprises a power adjustment parameter, the power adjustment parameter being used to adjust a transmit power of the first terminal device identifier.

53. The terminal device according to any one of claims 45 to 48, wherein a time-domain resource for transmitting the first terminal device identifier is randomly selected by the first terminal device.

54. The terminal device according to any one of claims 45 to 53, wherein the first information further comprises a first radio network temporary identifier (RNTI) associated with the terminal device identifier.

55. The terminal device according to claim 54, further comprising:
a third processing unit, configured to retain the first RNTI in a case where the first terminal device determines that contention resolution succeeds.

56. The terminal device according to claim 54 or 55, wherein the receiving unit is further configured to receive configuration information transmitted by the target device, wherein the configuration information is used to configure a length of the first RNTI for the first terminal device.

57. The terminal device according to any one of claims 45 to 56, wherein the first information further comprises:
information for indicating the first terminal device to access a network based on a backoff mechanism; and/or
a parameter for the first terminal device to perform a backoff mechanism.

58. The terminal device according to claim 57, wherein in a case where the first information comprises the parameter, the parameter is used to indicate a maximum number of times the first terminal device attempts to access the target device; and/or
backoff time information for the first terminal device to re-attempt to access the target device.

59. The terminal device according to claim 58, wherein in a case where the parameter is used to indicate the maximum number of times, the receiving unit is configured to re-monitor second information in a case where the first terminal device determines that contention resolution fails and a number of times the first terminal device attempts to access the target device is less than the maximum number of times.

60. The terminal device according to claim 58 or 59, wherein in a case where the parameter is used to indicate the maximum number of times, the terminal device further comprises:
a fourth processing unit, configured to determine that access to the target device fails in a case where the first terminal device determines that contention resolution fails and a number of times the first terminal device attempts to access the target device is greater than or equal to the maximum number of times.

61. The terminal device according to claim 58, wherein in a case where the parameter is used to indicate the backoff time information, the receiving unit is configured to:
re-monitor second information at a first time point, wherein the first time point is a time point after a backoff time indicated by the backoff time information, taking a time point when the first terminal device determines that contention resolution fails as a starting time point.

62. The terminal device according to any one of claims 45 to 61, wherein the first information carries a plurality of terminal device identifiers and a respective RNTI associated with each terminal device identifier among the plurality of terminal device identifiers, the plurality of terminal device identifiers comprising the first terminal device identifier.

63. The terminal device according to any one of claims 45 to 62, wherein the first information is carried on a broadcast channel.

64. The terminal device according to any one of claims 45 to 63, wherein the first terminal device receives the first information within a first time period, and a starting position of the first time period is determined based on a transmission time of the first terminal device identifier.

65. The terminal device according to claim 64, wherein the starting position of the first time period is the transmission time of the first terminal device identifier, or
the starting position of the first time period is separated from the transmission time of the first terminal device identifier by a first time interval.

66. The terminal device according to claim 64 or 65, further comprising:
a fifth processing unit, configured to determine that contention resolution fails in a case where the first information is not received within the first time period.

67. The terminal device according to any one of claims 45 to 66, wherein before the first terminal device transmits the first terminal device identifier to the target device, the transmitting unit is further configured to:
transmit a preamble to the target device, wherein the preamble is used for the target device to perform uplink time synchronization and/or uplink frequency synchronization.

68. A communication device, the communication device being a target device and comprising:
a receiving unit, configured to receive a first terminal device identifier transmitted by a first terminal device; and
a transmitting unit, configured to transmit first information, the first information comprising a terminal device identifier received by the target device,
wherein the target device comprises a network device and/or a second terminal device.

69. The communication device according to claim 68, wherein in a case where the terminal device identifier contained in the first information is the same as the first terminal device identifier, contention resolution for the first terminal device succeeds; and/or
in a case where the terminal device identifier contained in the first information is different from the first terminal device identifier, contention resolution for the first terminal device fails.

70. The communication device according to claim 68 or 69, wherein the first terminal device identifier is generated by the first terminal device.

71. The communication device according to any one of claims 68 to 70, wherein the transmitting unit is configured to transmit second information to the first terminal device, wherein the second information is used to trigger the first terminal device to transmit the first terminal device identifier, the second information being information transmitted aperiodically, or the second information being information transmitted periodically.

72. The communication device according to claim 71, wherein a first time-domain resource in which the first terminal device identifier is received is determined based on a reference time-domain resource, the reference time-domain resource being used to transmit the second information.

73. The communication device according to claim 72, wherein the first time-domain resource is determined based on the reference time-domain resource and a resource configuration parameter, the resource configuration parameter being used to indicate one or more of:
a time-domain offset between the reference time-domain resource and the first time-domain resource;
a respective duration corresponding to each time-domain resource among a plurality of time-domain resources, the plurality of time-domain resources comprising the first time-domain resource;
a time interval between two adjacent time-domain resources in time domain among the plurality of time-domain resources; and
a count of time-domain resources of the plurality of time-domain resources.

74. The communication device according to claim 73, wherein the resource configuration parameter is carried in the second information.

75. The communication device according to any one of claims 71 to 74, wherein the second information comprises a power adjustment parameter, the power adjustment parameter being used to adjust a transmit power of the first terminal device identifier.

76. The communication device according to any one of claims 68 to 71, wherein a time-domain resource for transmitting the first terminal device identifier is randomly selected by the first terminal device.

77. The communication device according to any one of claims 68 to 76, wherein the first information further comprises a first radio network temporary identifier (RNTI) associated with the terminal device identifier.

78. The communication device according to claim 76 or 77, wherein the transmitting unit is further configured to transmit configuration information to the first terminal device, wherein the configuration information is used to configure a length of the first RNTI for the first terminal device.

79. The communication device according to any one of claims 68 to 78, wherein the first information further comprises:
information for indicating the first terminal device to access a network based on a backoff mechanism; and/or
a parameter for the first terminal device to perform a backoff mechanism.

80. The communication device according to claim 79, wherein in a case where the first information comprises the parameter, the parameter is used to indicate a maximum number of times the first terminal device attempts to access the target device; and/or
backoff time information for the first terminal device to re-attempt to access the target device.

81. The communication device according to claim 80, wherein in a case where the parameter is used to indicate the maximum number of times, when contention resolution for the first terminal device fails and a number of times the first terminal device attempts to access the target device is greater than or equal to the maximum number of times, access of the first terminal device to the target device fails.

82. The communication device according to claim 80, wherein in a case where the parameter is used to indicate the backoff time information, the first terminal device re-monitors second information at a first time point, wherein the first time point is a time point after a backoff time indicated by the backoff time information, taking a time point when contention resolution for the first terminal device fails as a starting time point.

83. The communication device according to any one of claims 68 to 82, wherein the first information carries a plurality of terminal device identifiers and a respective RNTI associated with each terminal device identifier among the plurality of terminal device identifiers, the plurality of terminal device identifiers comprising the first terminal device identifier.

84. The communication device according to any one of claims 68 to 83, wherein the first information is carried on a broadcast channel.

85. The communication device according to any one of claims 68 to 84, wherein the first terminal device receives the first information within a first time period, and a starting position of the first time period is determined based on a transmission time of the first terminal device identifier.

86. The communication device according to claim 85, wherein the starting position of the first time period is the transmission time of the first terminal device identifier, or
the starting position of the first time period is separated from the transmission time of the first terminal device identifier by a first time interval.

87. The communication device according to claim 85 or 86, wherein in a case where the first information is not received within the first time period, contention resolution for the first terminal device fails.

88. The communication device according to any one of claims 68 to 87, wherein before the target device receives the first terminal device identifier transmitted by the first terminal device, the receiving unit is further configured to:
receive a preamble transmitted by the first terminal device, wherein the preamble is used for the target device to perform uplink time synchronization and/or uplink frequency synchronization.

89. A terminal device, the terminal device being a first terminal device and comprising: a transceiver, a memory, and a processor, wherein the memory is configured to store a program, and the processor is configured to invoke the program in the memory and control the transceiver to receive or transmit a signal, to enable the terminal device to perform the method according to any one of claims 1 to 23.

90. A communication device, the communication device being a target device and comprising: a transceiver, a memory, and a processor, wherein the memory is configured to store a program, and the processor is configured to invoke the program in the memory and control the transceiver to receive or transmit a signal, to enable the network device to perform the method according to any one of claims 24 to 44.

91. An apparatus, comprising: a processor configured to invoke a program from a memory to enable the apparatus to perform the method according to any one of claims 1 to 44.

92. A chip, comprising: a processor configured to invoke a program from a memory to enable a device equipped with the chip to perform the method according to any one of claims 1 to 44.

93. A computer-readable storage medium, storing a program thereon, wherein the program enables a computer to perform the method according to any one of claims 1 to 44.

94. A computer program product, comprising; a program, wherein the program enables a computer to perform the method according to any one of claims 1 to 44.

95. A computer program, wherein the computer program enables a computer to perform the method according to any one of claims 1 to 4.
